# DEMANDE DE BREVET EUROPEEN

(11) **EP 2 392 817 A1**
(43) Date de publication de la demande: **07.12.2011**
(21) Numéro de dépôt: 10735487.0
(22) Date de dépôt: 26.01.2010
(51) Int. Cl.: F03B 13/26, F03B 17/06

(54) **SYSTÈME DE GÉNÉRATION D'ÉNERGIE ÉLECTRIQUE PAR UTILISATION DE COURANTS D'EAU**

(30) Priorité: 27.01.2009 ES 200900221; 08.09.2009 ES 200901834
(71) Demandeur: Alandete Jurado, Leopoldo, 28015 Madrid (ES)
(72) Inventeur: Alandete Jurado, Leopoldo, 28015 Madrid (ES)
(74) Mandataire: Garcia-Cabrerizo y del Santo, Pedro Maria
(86) Numéro de dépôt international: PCT/ES2010/000026
(87) Numéro de publication internationale: WO 2010/086474

(57) **Abrégé**

Système de génération d'énergie électrique par exploitation de courants d'eau qui comprend des moyens configurés pour l'aspiration d'une masse de fluides lorsqu'ils sont actionnés par le courant, étant installés des moyens générateurs d'électricité (4) actionnés par la masse de fluides dans une position plus élevée. Les moyens configurés pour l'aspiration peuvent consister en un dispositif venturi qui aspire du fluide de la partie supérieure du courant ou en une roue hydraulique connectée à une pompe d'aspiration et impulsion à l'intérieur d'un circuit étanche.

## Description

### OBJET DE L'INVENTION

La présente invention a pour objet d'élever à la surface d'une masse d'eau, une partie de l'énergie d'un courant existant en son sein, pour qu'elle soit appliquée à la surface, ou à proximité de celle-ci, à une turbine ou à toute autre machine capable de convertir cette énergie mécanique en un travail ou en une autre forme distincte de l'énergie. L'élévation à la surface d'une partie de l'énergie d'un courant d'eau est réalisée par l'application de l'effet Venturi ou par l'installation sur son passage de roues hydrauliques qui transmettent cette énergie de différentes façons afin d'atteindre l'objectif final de son utilisation de production.

L'invention relève du secteur technique de production d'électricité, à l'aide de turbines, ou de toute autre machine, actionnées par des courants d'eau.

### ANTÉCÉDENTS DE L'INVENTION

Au fil des années, différentes propositions se sont succédé, qui sont généralement connues maintenant, et d'autres en développement, qui essaient d'utiliser le grand potentiel énergétique que fournissent les courants marins, telles que les différents types de turbines actionnées par des pales, des hélices, etc. Elles ont toutes pour caractéristique commune d'être situées dans le canal du courant lui-même. Également par la construction de digues ou d'enrochements.

En général, les propositions faites jusqu'à maintenant essaient d'utiliser l'énergie que transportent les courants d'eau, en installant sur leur passage des turbines ou d'autres types de machines qui produisent directement une énergie électrique, en la transportant sur la terre ferme, à l'aide d'un réseau de câbles. D'autres se réfèrent à la construction d'une digue ou à la construction d'enrochements où doivent être situées les turbines ou machines.

Les courants sont de véritables fleuves avec un potentiel énergétique très important, et qui varient selon leur situation géographique. Les propositions pour leur exploitation telles qu'elles sont indiquées, tentent de capter leur énergie et de la convertir en énergie électrique à l'intérieur de son propre habitat. La construction de turbines spécialement conçues pour qu'elles puissent fonctionner en ce lieu hostile représente un coût très supérieur à celles qui sont utilisées depuis longtemps dans des lieux plus appropriés, leur maintenance étant extrêmement coûteuse.

En ce qui concerne le transport de l'énergie finale produite, les turbines immergées dans les courants marins ont besoin de câbles spéciaux pour leur transport sur la terre ferme.

### EXPLICATION DE L'INVENTION

Pour pallier les problèmes techniques décrits on présente le système de génération d'énergie électrique par exploitation de courants d'eau caractérisé parce qu'il comprend, au moins, des moyens configurés pour l'élévation d'une masse de fluides jusqu'à la propre surface de cette masse de fluides, où lesdits fluides consistent en de l'eau, de l'air ou en une combinaison des deux, étant en outre présents à la surface de la masse de fluides des moyens générateurs d'électricité actionnés par ladite masse de fluides et où ladite électricité générée alimente électriquement un système d'électrolyse configuré pour la séparation de l'eau en hydrogène H et oxygène O, chacun desdits éléments étant stocké séparément.

Le principal avantage de la présente invention c'est le fait d'éviter qu'on ait à installer des turbines ou un autre type de machines en un lieu hostile, où il est difficile de réaliser une installation appropriée. Un autre de ses avantages est celui d'éviter les problèmes dérivés de la maintenance, ce qui se traduit également par un progrès sur le plan économique, puisqu'elle permet l'installation ou l'emploi de turbines standardisées.

Il convient de souligner son respect de l'environnement, puisque son fonctionnement n'altère pas l'écoulement du courant et ne produit pas les effets secondaires des pales, hélices ou autres éléments, des autres propositions visant la même exploitation.

Un autre aspect important de l'invention est l'emploi de cette dernière pour obtenir une production d'hydrogène, par électrolyse via l'énergie électrique obtenue, à son tour, par la présente invention et dont l'objectif économique est la réduction des coûts de sa production, de la maintenance et de l'investissement initial.

Cet abaissement du coût de l'énergie électrique obtenue et, par conséquent, sa répercussion sur l'obtention d'Hydrogène, fait que ce dernier est plus compétitif que les autres énergies traditionnellement employées.

L'obtention et le stockage *in situ* de l'hydrogène et de l'oxygène, permet d'insister sur le grand avantage du stockage, par comparaison avec le besoin d'avoir à disposer d'un grand nombre de batteries, dans le cas où l'on veut stocker de l'électricité.

Le rendement du travail produit, cela ne fait aucun doute, est supérieur à l'énergie éolienne, étant donné qu'elle n'est pas soumise aux variations climatiques et que son fonctionnement est ininterrompu vingt-quatre heures sur vingt-quatre. Par ailleurs, on peut même garantir le fait qu'elle est également plus avantageuse que l'énergie solaire.

L'excédent de la consommation de l'Hydrogène produit, au niveau local ou national, est facilement exportable, comme d'autres pays peuvent le faire à partir de l'emploi de l'énergie géothermique.

Tout au long de la description et des revendications le mot « comprend » et ses variantes ne sont pas destinés à exclure d'autres caractéristiques techniques, additifs, composants ou étapes. Les experts en la matière, déduiront, en partie de la description et en partie de la pratique de l'invention, d'autres objets, avantages et caractéristiques de l'invention. Les exemples et dessins suivants sont fournis à titre d'illustration et ne sont pas considérés comme étant limitatifs de l'invention. De plus, la présente invention couvre toutes les combinaisons possibles des réalisations particulières et préférées indiquées ici.

### BRÈVE DESCRIPTION DES DESSINS

FIG. 1 Montre une vue schématique du système de génération d'énergie électrique par exploitation de courants d'eau, avec l'utilisation de l'effet « Venturi ».
FIG. 2 Montre une vue schématique d'un module intégré du système de génération d'énergie électrique par exploitation de courants d'eau, avec des roues hydrauliques.

### PRÉSENTATION DÉTAILLÉE DE MODES DE RÉALISATION

Comme on peut l'observer sur les figures ci-jointes, l'objet principal de l'invention est de transférer une partie de l'énergie contenue dans un courant d'eau, de l'intérieur de la masse d'eau où elle se trouve, jusqu'à sa surface pour faciliter son exploitation dans la transformation d'énergie en électricité.

Pour cela on crée un courant secondaire induit et qui repose sur l'application de l'effet *Venturi* (le courant d'un fluide à l'intérieur d'un conduit fermé diminue la pression du fluide en augmentant la vitesse lorsqu'il passe par une section plus petite ; si à ce point on introduit l'extrémité d'un autre conduit il se produit l'aspiration du fluide contenu dans ce second conduit), guidé par le principe de Bernoulli (un fluide idéal qui circule dans un conduit fermé sans énergie reste constant tout le long de son parcours). Ainsi, le système dans la présente réalisation comprend, au moins :
(i) un premier tube horizontal capteur du courant 10 qui comprend, à son tour, un rétrécissement 11 dans sa partie médiane connecté à un second tube vertical 5 qui arrive à la surface de l'eau, créant par aspiration un nouveau courant à la surface ;

l'ensemble étant configuré pour que le courant du tube secondaire 5 se déplace vers un générateur électrique 4, lequel transforme en énergie électrique l'énergie cinétique dudit courant. Cette énergie est exploitée dans un appareil à électrolyse 3 pour convertir une partie de l'eau marine en hydrogène H et en oxygène O qui sont stockés dans des réservoirs séparés (1, 2).

La cavitation ou aspiration à vide, est un effet hydrodynamique qui se produit lorsque l'eau ou tout autre fluide à l'état liquide passe à grande vitesse dans une arête effilée, produisant une décompression du fluide en raison de la conservation de la constante de Bernoulli. Il peut arriver que soit atteinte la pression de vapeur du liquide de telle façon que les molécules qui le composent changent immédiatement à l'état de vapeur, avec formation de bulles ou, plus exactement, de cavités. Cet effet est préjudiciable en raison de la détérioration qu'il produit sur un métal. Sur tout l'ensemble de la présente invention, à la différence d'autres, ce risque de détérioration n'existe pas.

Si nous introduisons dans une masse d'eau un second tube vertical 5, par ses extrémités, à mesure qu'il entrera dans l'eau il se remplira à tout moment au même niveau que celui qu'a la masse d'eau. La pression atmosphérique qui s'exerce sur son ouverture supérieure est la même que celle du reste de la masse d'eau. Nous pouvons donc considérer que la masse d'eau et le second tube vertical 5 se comportent comme des vases communicants.

Si nous fermons la partie supérieure du tube, au cours de son introduction dans l'eau, l'air contenu acquerra une pression supérieure à la pression atmosphérique, en raison de la pression que la masse d'eau exerce, n'atteignant pas le niveau supérieur de cette masse. La partie dans laquelle l'air est contenu, à cause du principe d'Archimède, est la quantité d'eau déplacée, tout le tube secondaire 5 subissant une poussée vers le haut égale au poids de l'eau délogée.

En ce qui concerne l'extrémité opposée, inférieure, du tube 5, on observe qu'elle sera soumise à la pression correspondant à la profondeur qu'il aura atteinte.

Si l'on introduit un nouvel élément, consistant en un cylindre ou tube primaire 10, installé dans le courant (dans ce cas) marin, chargé de capter une partie du débit du courant. Ouvert à ses extrémités et avec un rétrécissement 11 en son point médian. Ce rétrécissement fera augmenter la vitesse de l'eau et, par conséquent, une perte de sa pression.

En connectant le tube secondaire 5 à ce point, la dépression produite aspirera aussi bien l'eau que l'air qui s'y trouve. Dans ce cas, cette aspiration de l'eau sera également favorisée tant par la pression de l'air qu'il contient que par le propre poids de la colonne d'eau.

L'air contenu est décompressé poussant la colonne d'eau vers le courant, alors qu'en même temps la colonne d'eau continuera de produire un vide, sous l'action de la dépression apparue et de son propre poids.

Si l'extrémité supérieure du tube secondaire 5 est ouverte, lequel reste fermé, à la pression atmosphérique, de façon simplifiée, deux situations se produisent :
(a) si l'extrémité supérieure du tube secondaire 5 se trouve au-dessus du niveau de l'eau, en contact avec l'atmosphère, non seulement l'eau contenue dans le tube secondaire se videra vers le courant, mais l'air, qui peut maintenant entrer par la partie supérieure, occupera sa place et lorsque viendra son tour il sera aspiré vers le courant. Il est évident que de cette façon, une circulation de l'air atmosphérique vers le courant sera établie, puisque la vitesse de l'eau crée une dépression qui tend à produire le vide.
(b) Si l'extrémité supérieure du tube secondaire 5 se trouve en dessous du niveau de la mase d'eau, si les deux extrémités sont ouvertes et qu'il n'existe pas de connexion avec le courant, le tube 5 sera totalement rempli d'eau et sans mouvement apparent de circulation. Si l'extrémité inférieure de ce tube secondaire 5 nous la connectons au primaire 10, au point où se produit la dépression par augmentation de la vitesse de l'eau, nous obtiendrons également une aspiration qui, associée au poids de la colonne de l'eau et à la pression et à la vitesse qu'apportera le débit d'eau à son entrée depuis la partie supérieure du tube, fera surgir un nouveau courant induit.

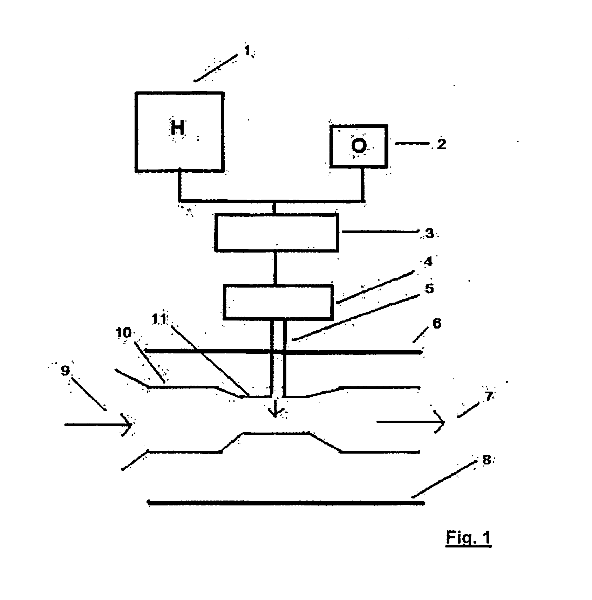

Avec cela on parvient à transférer une partie du potentiel énergétique qu'apporte le courant marin à la surface ou très près d'elle, selon les conditions du milieu et d'autres circonstances. Cette réalisation pratique, comme on peut l'observer sur la figure 1, où l'on peut apprécier comment le tube primaire 10 comprend une entrée du courant 9 et une sortie du courant 7. De la même façon, on observe comment est créé le courant secondaire avec une entrée d'eau dans la turbine 4 et le second tube vertical 5 connecté avec le rétrécissement 11 du tube horizontal 10.

Nous avons, par conséquent, situé le potentiel nécessaire pour alimenter les turbines ou machines envisagées, nécessaires pour réaliser un travail, en un lieu moins hostile que là où se trouve le canal ou le lit dans lequel circule le courant marin.

Cette alimentation, comme nous l'avons vu, il est possible de la réaliser au moyen de l'air introduit par l'aspiration ou par la circulation d'eau produite. Lorsque, plus loin, nous nous référerons à celle-ci, nous le ferons sous la désignation de « courant secondaire ».

Les éléments essentiels qui interviennent dans l'invention qui est proposée sont :
Une masse d'eau, que ce soit un océan, une mer, un fleuve, des barrages, etc., où il existe, ou bien, où l'on puisse faire en sorte qu'il existe de façon artificielle, un courant d'eau avec les caractéristiques propres qui renferment un potentiel énergétique.

Un tube ou cylindre vertical 5, qu'on nomme également tube secondaire, sur lequel dans sa partie supérieure, d'entrée d'air ou d'eau, sont installés les générateurs électriques 4 pour l'exploitation de la circulation d'air ou d'eau produite, selon ce qui a été indiqué précédemment.

Un cylindre horizontal 10, d'un diamètre adapté aux besoins d'un projet déterminé, installé horizontalement (longitudinalement) sur le parcours du courant d'eau, qu'on nomme également tube primaire, qui capte une partie de son débit. La bouche d'entrée aura la forme d'un entonnoir, afin de capter le débit nécessaire. À son tour la circulation dans le cylindre 10 doit être accélérée.

Pour obtenir une plus grande vitesse de l'eau apportée, en un point de la longueur du cylindre horizontal 10, on pratiquera un rétrécissement 11 qui, par conséquent, réduira la pression. Son résultat sera l'obtention de l'effet *Venturi* désiré.

La connexion du tube secondaire au primaire peut être réalisée de diverses façons, au moins une sélectionnée parmi :
une première façon telle que la simple jonction des deux éléments au même point du rétrécissement 11 du tube primaire ;
une pénétration du tube secondaire 5 vers le centre du primaire 10, adoptant la forme d'un L, dont la partie inférieure sera orientée dans le sens du courant et en la situant à la hauteur du rétrécissement ;
Le rétrécissement 11 du tube 10, peut être réalisé par une diminution du diamètre intérieur du propre tube à ce point, ou bien, en respectant le même diamètre sur tout son parcours, mais en introduisant à l'intérieur de lui un corps (creux) en forme de fuseau, dont la partie la plus large devra produire le rétrécissement souhaité ;
Le fuseau sur sa partie avant (selon le sens du courant) sera connecté, à l'aide d'un tube, au tube secondaire 5, aidant ainsi à augmenter l'aspiration à l'intérieur de lui. Cet effet se produit lorsque le fuseau mentionné est ouvert dans sa partie postérieure qui, en raison de l'effet d'expansion (ou vide) du courant d'eau qui l'entoure qui, dans une plus ou moins large mesure, se produit nécessairement ;

Afin d'obtenir une plus grande surface d'aspiration, le tube secondaire 5 peut être connecté au tube 10, à l'aide d'un anneau qui entoure extérieurement le tube 10, ayant une communication avec l'intérieur de celui-ci, à travers les divers orifices pratiqués dans sa structure.

De plus, la bouche d'entrée de l'eau du courant 9, sera précédée d'un grillage qui évitera que des corps volumineux ne puissent s'introduire dans le circuit.

Les générateurs 4 seront dans une salle des machines, destinée à loger lesdits générateurs. Selon qu'on adoptera une alimentation, par air ou par eau, dans sa partie supérieure elle disposera d'une prise adaptée pour leur entrée, protégée elle aussi par un filtre, ainsi que d'une sortie dans la partie inférieure.

L'emplacement des générateurs est variable, pouvant être situés en n'importe quel point du circuit du courant secondaire obtenu, même en faisant partie du propre tube primaire 10. Cependant, ce qui est souhaitable, c'est qu'il soit installé sur la terre ferme ou à la surface de la masse d'eau.

Quant à l'emplacement possible à la surface de l'eau, la salle des machines pourra reposer sur une tour fixée dans le lit ou fond de la masse d'eau, similaire à celles qui existent pour les puits de pétrole, ou bien sur une plateforme flottante, dûment ancrée. Étant donné qu'en principe, le tube secondaire 5 est connecté au primaire 10 perpendiculairement, on peut considérer comme étant plus adaptés, pour cette connexion, les quatre points de la circonférence du tube primaire, 0°, 90°, 180° ou 270°. La position de 0°, est la position verticale entre le tube primaire et la surface de l'eau.

À 90° ou 270°, le tube secondaire devrait passer parallèlement au lit, en s'adaptant dans la mesure du possible à sa configuration et en s'approchant du mur de la côte pour initier son ascension vers la surface.

La connexion au point correspondant aux 180°, signifierait la possibilité que le tube secondaire serve également de patte de support, en s'introduisant dans le lit marin et en s'approchant de la côte, même souterrain. Cela serait la connexion idéale, la plus écologique, et qui ne perturberait pas la navigation, si les conditions adaptées sont réunies.

La solution indiquée, par conséquent, ne présente ni vannes ni parties mobiles susceptibles de subir des avaries. Elle a pour finalité de situer une partie de l'énergie fournie par les courants marins dans une zone plus propice à son exploitation comme l'est la surface de la masse d'eau.

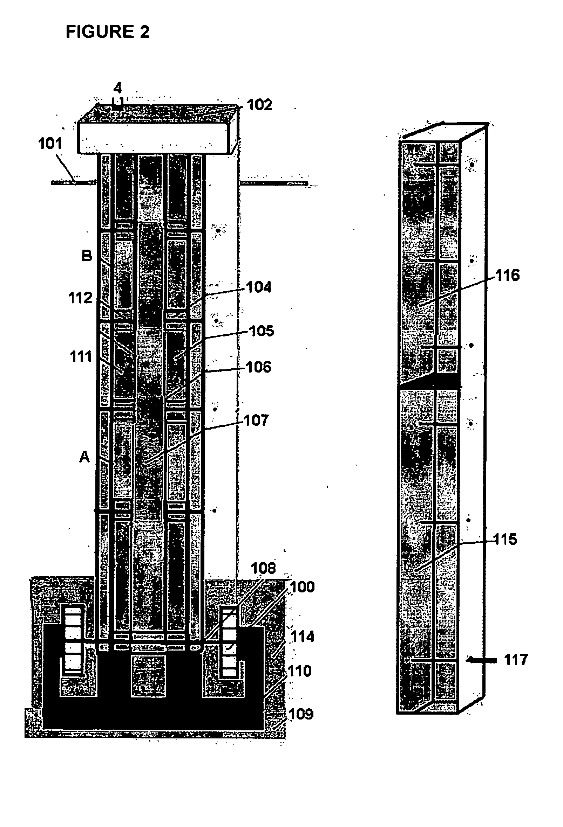

Toutefois, la présente invention décrit d'autres solutions pour mener à bien le transfert de l'énergie propre aux courants marins à la surface de la masse d'eau, comme on peut l'observer sur la figure 2. Cette solution est basée sur l'installation de roues hydrauliques 100. Les roues hydrauliques sont définies comme les roues pourvues de petites pales sur lesquelles agit la force de l'eau d'une chute ou d'un courant entraînant leur rotation et, avec elle, le mouvement d'une installation industrielle.

Les roues hydrauliques 100, sur lesquelles sont installées des pales, des aubes, ou toute autre forme similaire, transversales ou verticales, sont reliées aux extrémités d'un axe commun, dont la rotation, par la force propre à un courant d'eau, existant dans une masse d'eau, entraîne leur rotation et avec elle, le mouvement d'un générateur électrique 4 connecté à celui-ci.

L'installation de roues hydrauliques 100 dans un courant d'eau est la pierre angulaire, à partir de laquelle on part pour faire fonctionner tout le système conçu pour l'exploitation attendue. La transmission de cette impulsion se fait de diverses façons pour qu'elle atteigne son but, qui est de transférer une partie de l'énergie du courant d'eau, comme celle d'un courant marin en vue de son exploitation à la surface de la masse d'eau pour la réalisation d'un travail.

Sur la figure 2, on observe la représentation schématique d'une solution possible qui part de l'emploi d'une courroie de transmission 101 pour faciliter précisément la transmission entre les roues hydrauliques 100 et les moyens générateurs 4 sur un module simple, susceptible d'être relié à d'autres modules similaires, ce qui aboutit à la modularité du système.

Cependant, cette solution n'est pas la seule, et on envisage par exemple la connexion à une machine pneumatique à vide, où une machine pneumatique à vide avec entrée d'air, alimente une autre machine pneumatique, qui à son tour actionne les moyens générateurs 4. Tout cela à travers un tube qui élève la masse d'eau à la surface et toujours en partant des roues hydrauliques 100.

Une autre solution réside dans la connexion à une pompe hydraulique d'impulsion, où si nous introduisons dans une masse d'eau un tube vide ouvert à ses extrémités, l'eau pénètre progressivement dans le tube à mesure qu'il descend, ce qui conserve le niveau de la masse d'eau. De cette façon, aussi bien le tube que l'eau qui l'entoure se comporteront comme des vases communicants, tous deux étant équilibrés par la même pression qu'ils reçoivent. En connectant la partie inférieure du tube à une pompe hydraulique qui pousse l'eau contenue dans le tube, vers la surface, on aura seulement besoin d'appliquer la force nécessaire pour réaliser le travail d'une turbine ou d'une quelconque machine hydraulique. Le poids de la colonne d'eau qui se trouve dans le tube introduit, est compensé par la poussée vers le haut à laquelle il est soumis en raison du propre effet des vases communicants. Ainsi, la pompe hydraulique, actionnée par la roue hydraulique, pousse l'eau, captée à son entrée et contenue dans le tube d'élévation, au-dessus du niveau de l'eau, en ayant actionné la pompe hydraulique et les moyens générateurs. Enfin, la sortie de l'eau se déverse sur le niveau de la masse d'eau. L'entrée de l'eau dans la pompe hydraulique, peut être réalisée via la connexion à un tube d'une longueur identique à celle du tube d'élévation, qui connectés constitueront un circuit étanche, la même eau restant, une fois rempli et pourvu d'une petite vanne pour conserver son volume et sa pression.

Ainsi, la sortie de l'eau de la pompe hydraulique serait connectée à l'entrée du nouveau tube intégré et la sortie de ce dernier à l'entrée de la pompe hydraulique, actionnée par les roues hydrauliques. Il est signalé, qu'aussi bien la pompe hydraulique que les moyens générateurs d'électricité, sont situés à l'intérieur du circuit étanche. L'axe de la pompe hydraulique, avec sa sortie à l'extérieur, transmet le mouvement giratoire reçu des roues hydrauliques qui comme dans les autres cas sont reliées à ses extrémités. La turbine fait partie intégrante du générateur électrique, étant pourvue d'une prise de courant pour sa sortie à l'extérieur. Dans le cas où le générateur électrique serait à l'extérieur, ils seraient reliés par un axe. Cela serait fait de la même façon dans le cas de n'importe quelle autre machine afin qu'elle puisse réaliser le travail auquel elle est destinée. Tout l'ensemble décrit peut se trouver en dessous du niveau de la masse d'eau ou une partie dudit ensemble peut en émerger.

Une autre solution possible réside dans la connexion à une pompe hydraulique d'extraction qui aspire l'eau contenue dans le tube secondaire et l'air du tube, qui dispose d'un petit orifice, pulvérise l'air pour augmenter sa densité et faciliter l'aspiration. L'entrée de l'eau actionne la turbine ou machine hydraulique, connectée aux moyens générateurs d'électricité 4. L'entrée de l'air, à son tour, actionne la machine pneumatique.

Ce qui a été décrit précédemment, pour la connexion des roues hydrauliques 100 à une pompe hydraulique ou à un compresseur, a une alternative via l'installation d'une courroie de transmission ou bien via un axe à engrenages.

Les courants marins peuvent être superficiels ou profonds, parmi ceux-ci, il en est qui se trouvent à plus de 100 mètres en dessous de la surface. Par conséquent on a essayé de résoudre cette difficulté que représente l'utilisation d'une « courroie de transmission simple » par l'utilisation de ce que nous nous permettons d'appeler une « courroie de transmission multiple », et qui est proposée comme nouveauté. Les courroies de transmission sont en règle générale fabriquées en caoutchouc, et peuvent être plates ou trapézoïdales. Leur fonctionnement repose fondamentalement sur les forces de friction. Celles qui sont dentées se différencient de celles qui se basent sur l'interférence mécanique entre les différents éléments de la transmission. Dans notre cas, aussi bien les unes que les autres pourraient être utilisées.

Sur la figure 2 une première forme est représentée. Dans ce cas les roues hydrauliques 100 sont installées de manière indépendante sur le passage du courant d'eau.

Via un axe, la rotation acquise est transmise à une courroie de transmission. Les roues hydrauliques 100 sont intégrées à la base de la courroie de transmission, avec un unique support, partageant un même axe 108. La courroie de transmission est formée de plusieurs tronçons de modules assemblés (105, 107, 111), qui seront détaillés plus loin. Dans la partie finale ou supérieure de la courroie de transmission, se trouve un espace ou enceinte où sont situés les moyens de génération 4, qui sont actionnés par le dernier axe des modules. Avec la connexion à une courroie de transmission, sont éliminés : la pompe d'impulsion, d'extraction, le compresseur et le circuit hydraulique étanche, dans leurs cas respectifs.

Nous nous retrouverions uniquement avec un ensemble, formé par les roues hydrauliques 100, la courroie de transmission (105, 107, 111) et l'ancrage 110, tout cela connecté à la surface aux moyens de génération 4.

Cette structure peut être dite modulaire, elle comprend trois axes horizontaux, au minimum, reliés à trois cylindres, sur lesquels sa partie extérieure est formée par trois poulies 104, 106 et 112. Les axes 102, 108 et 117 reposent, à l'aide de coussinets antifriction sur quatre piliers ou colonnes.

Les deux colonnes intérieures, situées aux extrémités des trois poulies, maintiennent fixée la position des poulies, permettant qu'elles tournent librement conjointement avec leur axe. De la même façon, les colonnes intérieures, sont fixées à une armature extérieure avec six points de fixation. Aussi bien les colonnes que l'armature, disposent à leurs extrémités d'éléments afin qu'elles puissent être assemblées aux autres tronçons. Les axes se prolongent horizontalement vers l'extérieur de l'armature où ils reposent également sur des coussinets antifriction. La prolongation des axes vers l'extérieur, permet de les connecter, optionnellement, à des popes hydrauliques ou pneumatiques, leur transmettant le mouvement de leur rotation.

Les bandes ou courroies sont disposées de telle façon que celle correspondant à la poulie centrale, part de l'inférieure jusqu'à la suivante, pour lui transmettre son mouvement. Ce module correspondrait au premier tronçon de la courroie de transmission, dont la poulie initie le mouvement, étant donné qu'elle est reliée à son axe, qui a reçu l'impulsion des roues hydrauliques. Le mouvement est transmis à l'axe suivant, par la courroie centrale 107. Les poulies latérales de ce dernier axe, auquel elles sont reliées, transmettent leur mouvement à l'axe suivant, via leurs deux bandes. Le cycle achevé, le suivant commence à l'aide de la courroie qui se trouve dans la partie centrale du dernier axe. Les cylindres doivent être résistants, fabriqués dans un matériau léger et creux à l'intérieur, pour compenser par leur flottabilité leur propre poids.

L'emploi de modules dans la courroie de transmission multiple, facilite la maintenance de tout l'ensemble, ainsi que la fabrication en série de ces derniers. La pose du nombre de pompes hydrauliques, sur les axes des modules, ainsi que leur taille, dépendra du besoin d'énergie à consommer, et de l'énergie que pourront capter et transmettre les roues hydrauliques, qui, en général, est considérable.

En ce qui concerne l'ancrage et le support du système, il faut distinguer deux zones dans une masse d'eau, en tenant compte de la vitesse et de la force avec lesquelles se déplace le courant d'eau, comme cela arrive dans un courant marin. Du fond de la masse au niveau supérieur du courant, le support de tout le système doit être robuste et en même temps interférer au minimum sur son passage.

En général, on estime que peuvent suffire quatre pattes ancrées dans son fond, avec des distances entre elles qui assurent l'équilibre total de la tour.

À partir de ce niveau supérieur du courant, la construction pour le support jusqu'à la surface, est moins exigeante dans sa conception. Il y a des exemples qui ont fait leurs preuves sur les plateformes pétrolières, qu'elles soient flottantes ou fixes, dont nous pourrions nous servir de modèles pour les adapter, de façon similaire, avec des dimensions beaucoup plus réduites.

Les positions que peuvent adopter les ancrages sont à sélectionner parmi :
(a) Position verticale par rapport au fond marin.
(b) En formant un angle à 180° pour passer parallèlement au fond marin et prendre la verticalité sur le mur de la côte jusqu'à la surface.

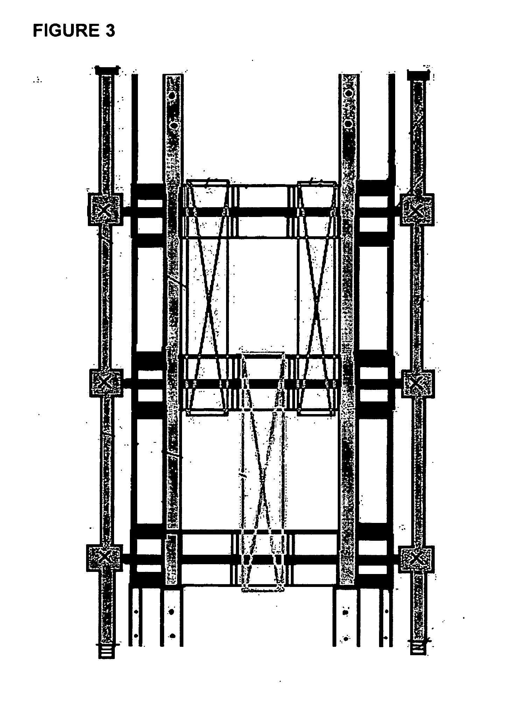

Détail d'un module figure 3

## Revendications

1. Système de génération d'énergie électrique par exploitation de courants d'eau **caractérisé par**ce qu'il comprend, au moins, des moyens configurés pour l'élévation (5, 10, 100) d'une masse de fluides jusqu'à la propre surface de cette masse de fluides, où lesdits fluides consistent en de l'eau, de l'air ou en une combinaison des deux, étant en outre présents à la surface de la masse de fluides des moyens générateurs d'électricité (4) actionnés par ladite masse de fluides et où ladite électricité générée alimente électriquement un système d'électrolyse configuré pour la séparation de l'eau en hydrogène H et oxygène O, chacun desdits éléments étant stocké séparément (1, 2).

2. Système conformément à la revendication 1 **caractérisé par**ce que les moyens configurés pour l'élévation d'une masse de fluides comprennent un premier tube horizontal capteur du courant (10) qui comprend, à son tour, un rétrécissement (11) connecté à un second tube vertical (5) qui arrive à la surface de l'eau, créant par aspiration un nouveau courant qui élève la masse de fluides à la surface.

3. Système conformément à la revendication 1 **caractérisé par**ce que les moyens configurés pour l'élévation d'une masse de fluides comprennent une pluralité de roues hydrauliques (100) qui, poussées par le courant de la masse de fluides, poussent une masse équivalente dans un conduit jusqu'à la surface de ladite masse de fluides, actionnant à son tour les moyens générateurs d'électricité (4).
